(19)

Europäisches
Patentamt

European
Patent Office

Office européen
des brevets

(11) **EP 2 854 330 A2**

(12) **EUROPEAN PATENT APPLICATION**

(43) Date of publication:
   **01.04.2015 Bulletin 2015/14**

(51) Int Cl.:
   **H04L 9/30** (2006.01)

(21) Application number: **14174680.0**

(22) Date of filing: **27.06.2014**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **17.09.2013 CN 201310425409**

(71) Applicant: **South China University of Technology
   Guangdong 510640 (CN)**

(72) Inventors:
   • **Tang, Shaohua
     510640 Guangzhou City (CN)**
   • **Shen, Wuqiang
     Tianhe District, Guangzhou City
     Guangdong 510640 (CN)**

(74) Representative: **Romano, Giuseppe et al
   Società Italiana Brevetti S.p.A
   Piazza di Pietra, 39
   00186 Roma (IT)**

(54) **System and method for multivariate public key encryption/decryption**

(57)    A system for multivariate public key encryption/decryption is disclosed, including an encryption module and a decryption module, wherein the encryption module includes a processor and a public key transformation component configured to transform a plaintext to a ciphertext, the decryption module comprises a processor, a first affine transformation inversion component, an isomorphism inversion component, a trapdoor component, an isomorphism component and a second affine transformation inversion component, the trapdoor component includes a modular exponentiation component and a polynomial inversion component, corresponding operations are performed by the components to get one or more groups data, the processor calculates the hash value of the data respectively that if a hash value of one group of data are equal to the plaintext hash redundant data stored in the processor in advance, the group of data are stored and output as an expected plaintext, otherwise the processor outputs a warning message of decryption failure.

Fig. 1

**Description**

**FIELD OF THE INVENTION**

The present disclosure relates generally to the field of information security, and specifically to a system and method for multivariate public key encryption/decryption.

**BACKGROUND OF THE INVENTION**

Cryptography is the core and base of the information security, which is widely used in the areas of network communication, electronic commerce, bank and national defense and military. The cryptology includes symmetric cryptography and asymmetric cryptography, and the asymmetric cryptography also known as public key cryptography.
At present, the security of the public key cryptography relies largely on the intractability of the large integer factorization problem and discrete logarithm problem, such as RSA or ECC. However, this traditional public key cryptography has been under great threat since it was proposed that the method for factoring large integer and the method for solving discrete logarithm can be implemented in a quantum computer, which will affects every industry sector. Therefore, people began to find a cryptography system that can protect against quantum computer attacks to meet the requirements of the information security, this kind of cryptography systems is called as post quantum cryptography, and multivariate public key cryptography is one of them.

**SUMMARY OF THE INVENTION**

The main object of the present disclosure is to provide a system for multivariate public key encryption/ decryption, which has a high security and operation efficiency, to overcome defects and shortages in the prior art.
The other object of the present disclosure is to provide a method for multivariate public key encryption/decryption, which has a high security and operation efficiency.
In order to achieve the purpose of the present disclosure, the following solution is presented.
According to one aspect of the present disclosure, a system for multivariate public key encryption/decryption includes:

an encryption module, configured to encrypt a plaintext to be encrypted and generate a ciphertext, including a processor and a public key transformation component, wherein, when the plaintext to be encrypted is transmitted to the processor, the processor calculates the hash value of the plaintext to obtain corresponding plaintext hash redundant data, stores the plaintext and plaintext hash redundant data, and then transmits the plaintext data to the public key transformation component, the plaintext data are then substituted into multivariate polynomials respectively to obtain a ciphertext, the ciphertext is subsequently transmitted to the processor for storing, and the processor transmits both the ciphertext and the plaintext hash redundant data to a decryption module of other users, where the plaintext hash redundant data plays a role of detecting plaintext; and

a decryption module, configured to process the ciphertext and plaintext hash redundant data from other users and generate a plaintext, including a processor, a first affine transformation inversion component, an isomorphism inversion component, a trapdoor component, an isomorphism component and a second affine transformation inversion component, where the trapdoor component includes a modular exponentiation component and a polynomial inversion component, after receiving the ciphertext and plaintext hash redundant data from other users the processor stores the plaintext hash redundant data and transmits the ciphertext to the first affine transformation inversion component for operation on affine transformation inversion, the result of the first affine transformation inversion component is transmitted to the isomorphism inversion component for operation on isomorphism inversion, the result of the isomorphism inversion component is transmitted to the modular exponentiation component and polynomial inversion component of the trapdoor component for operations on modular exponentiation and polynomial inversion respectively, one group or multiple groups of solutions calculated by the polynomial inversion operation are transmitted to the isomorphism component for operation on isomorphism, the result of the isomorphism component is transmitted to the second affine transformation inversion component for operation on affine transformation inversion, the final result is transmitted to the processor, and for transferred one group or multiple groups of data, the processor calculates the hash value of each group of data respectively that if a obtained hash value of one group of data are equal to the plaintext hash redundant data stored in the processor in advance, the group of data are stored and output as a expected plaintext, otherwise the processor outputs a warning message of decryption failure.

Preferably, the system for multivariate public key encryption/decryption also includes a selector connected with the processor. When the selector is in an ON-state, the encryption module of the system works, and when the selector is in an OFF-state, the decryption module of the system works. A first user uses the encryption module for encryption to generate a ciphertext that is transmitted to a second user, the second user uses the decryption module for decryption, and a whole system is formed by the two, and vice versa, the second user uses the encryption module for encryption to generate a ciphertext that is transmitted to the first user, the first user uses the decryption module for decryption, so the same user needs to have the both different devices that the encryption module and the decryption module to meet demand, which will cause inconvenience to users. With the solution including the selector, the same user only needs a same device that the user can select the device to encrypt or decrypt according to his/her requirements in convenient.

Preferably, the processor includes a scheduler connected with the selector, the ON-state and OFF-state of the selector are recognized and managed by the scheduler in the processor, and the data stored in the processor is controlled by the scheduler to be scheduled to the corresponding component for operation accordingly.

Preferably, the processor also includes a hash detector, configured to calculate the hash value of data in the processor, and a memory, configured to store data in the processor.

According to another aspect of the present disclosure, a method for multivariate public key encryption/decryption includes the following steps:

Step 1, encryption:

a. when the plaintext to be encrypted is transmitted to the processor, the processor calculates the hash value of the plaintext to obtain corresponding plaintext hash redundant data, and stores the plaintext and plaintext hash redundant data;

b. the plaintext data are transmitted to the public key transformation component, a ciphertext can be obtained by plugging the plaintext data into multivariate polynomials respectively;

c. the ciphertext is subsequently transmitted to the processor for storing, and the ciphertext is transmitted to a decryption module of other users by the processor together with the plaintext hash redundant data;

Step 2, decryption:

a. after receiving the ciphertext and plaintext hash redundant data from other users the processor stores the plaintext hash redundant data and transmits the ciphertext to the first affine transformation inversion component for operation on affine transformation inversion;

b. the result of the first affine transformation inversion component is transmitted to the isomorphism inversion component for operation on isomorphism inversion;

c. the result of the isomorphism inversion component is transmitted to the modular exponentiation component and polynomial inversion component of the trapdoor component for operations on modular exponentiation and polynomial inversion respectively, and one group or multiple groups of solutions can be calculated by the polynomial inversion operation.

d. the one group or multiple groups of solutions calculated by the polynomial inversion operation are transmitted to the isomorphism component for operation on isomorphism;

e. the result of the isomorphism component is transmitted to the second affine transformation inversion component for operation on affine transformation inversion; and

f. the final result is transmitted to the processor, and for transferred one group or multiple groups of data, the processor calculates the hash value of each group of data respectively that if a obtained hash value of one group of data are equal to the plaintext hash redundant data stored in the processor, the group of data are stored and output as a plaintext, otherwise the processor outputs a warning message of decryption failure.

Preferably, for the method for multivariate public key encryption/decryption of the present disclosure, the encryption of Step 1 includes:

a. when the plaintext to be encrypted $(x_1',...,x_n') \in F^n$ is transmitted to the processor, the processor calculates the hash value of the plaintext $(h_1',...,h_j') = Hash(x_1',...,x_n')$ to obtain plaintext hash redundant data $(h_1',...,h_j')$, and stores

the plaintext and plaintext hash redundant data, where $Hash(\cdot)$ is secure one-way function in cryptography;

b. plaintext data $(x_1',...,x_n')$ is transmitted to the public key transformation component, and is plugged into the public key map $P(x_1,...,x_n)$ by the public key transformation component to respectively solve the multivariate polynomials $p_1(x_1',...,x_n'),...,p_n(x_1',...,x_n')$, the results are respectively denoted by $y_1',...,y_n'$, and $(y_1',...,y_n')$ is the expected ciphertext; and

c. the ciphertext $(y_1',...,y_n')$ is subsequently transmitted to the processor for storing, and the ciphertext $(y_1',...,y_n')$ is transmitted together with the plaintext hash redundant data $(h_1',...,h_j')$ to a decryption module of other users by the processor.

Preferably, the decryption of Step 2 includes:

a. after receiving the ciphertext $(y_1',...,y_n')$ and plaintext hash redundant data $(h_1',...,h_j')$ from other users the processor stores the plaintext hash redundant data $(h_1',...,h_j')$ and transmits the ciphertext $(y_1',...,y_n')$ to the first affine transformation inversion component for operation on affine transformation inversion by $(\overline{y}_1,...,\overline{y}_n)=T^{-1}(y_1',...,y_n')$;

b. the result of the first affine transformation inversion component $(\overline{y}_1,...,\overline{y}_n)$ is transmitted to the isomorphism inversion component for operation on isomorphism inversion by $\overline{Y} = \varphi^{-1}(\overline{y}_1,...,\overline{y}_n)$;

c. the result of the isomorphism inversion component $\overline{Y}$ is transmitted to the trapdoor component for operations on modular exponentiation and polynomial inversion respectively, namely, the modular exponentiation component calculates the inverse $v$ of t by $t \cdot v \equiv 1 mod(q^n - 1)$ and calculates $\hat{Y} = \overline{Y}^v$, then the polynomial inversion component solves $g(\hat{X}) = \hat{Y}$ on unknown variable $\hat{X}$ by the probabilistic Berlekamp algorithm , and one or more groups of solutions can be obtained, $d$ groups at most, so the solution set can be denoted by $\hat{X}_i$ $(1 \leq i \leq d)$;

d. $\hat{X}_i (1 \leq i \leq d)$ are transmitted to the isomorphism component for operation on isomorphism, $(\overline{x}_{i1},...,\overline{x}_{in}) = \varphi(\hat{X}_i)$ ;e. the result of the isomorphism component is transmitted to the second affine transformation inversion component for operation on affine transformation inversion by $(x_{i1}',...,x_{in}') = S^{-1}(\overline{x}_{i1},...,\overline{x}_{in})$; and

f. the final result $(x_{i1}',...,x_{in}')$ is transmitted to the processor, the processor calculates the hash value of $(x_{i1}',...,x_{in}')$ that if a obtained hash value of $(x_{i1}',...,x_{in}')$ for some $i$ is equal to the plaintext hash redundant data $(h_1',...,h_j')$, the group of data $(x_{i1}',...,x_{in})$ is output as a decrypted plaintext, and if $(x_{i1}',...,x_{in}') \neq (h_1',...,h_j')$ for all value of $i$, the processor outputs a warning message of decryption failure.

Preferably, before the encryption of Step 1 the method for multivariate public key encryption/decryption also includes that when the selector is in an ON-state, the encryption module of the system works, where the selector is connected with the processor.
Preferably, before the decryption of Step 2 it further includes that when the selector is in an OFF-state, the decryption module of the system works, where the selector is connected with the processor.
Preferably, the processor includes a scheduler connected with the selector, the ON-state and OFF-state of the selector are recognized and managed by the scheduler in the processor, and the data stored in the processor is controlled by the scheduler to be scheduled to the corresponding component for operation accordingly.
Preferably, the processor also includes a hash detector, configured to calculate the hash value of data in the processor, and a memory, configured to store data in the processor.
Compared with the present technologies, the present disclosure has the following advantages and benefits:

the system of the present disclosure can protect against algebraic attacks in current known for multivariate public key under some choices of system parameters, with high security; and

it takes less time on encryption and decryption, with quicker response.

## BRIEF DESCRIPTION OF THE DRAWINGS

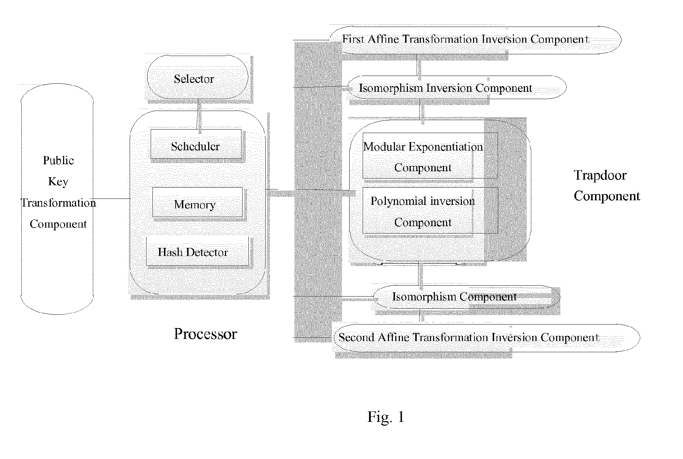

Figure 1 shows a schematic view of a system for multivariate public key encryption/decryption according to one embodiment of the present disclosure.

## DETAILED DESCRIPTION OF THE PREFERRED EMBODIMENTS

As shown in Fig. 1, a system for multivariate public key encryption/decryption includes:

a selector, connected with the scheduler, when the selector is in an ON-state, the encryption module of the system works, and when the selector is in an OFF-state, the decryption module of the system works;

an encryption module, configured to encrypt a plaintext to be encrypted and generate a ciphertext, including a processor and a public key transformation component, the plaintext to be encrypted is transmitted to the processor, where the processor includes a scheduler, a hash detector, a memory, the hash detector calculates the hash value of the plaintext to obtain corresponding plaintext hash redundant data, the plaintext and plaintext hash redundant data are stored in the memory, then the plaintext data are transmitted to the public key transformation component, the public key transformation component plugs the plaintext data into the public key map that calculate the solution of each multivariate polynomial of the public key map respectively to obtain a ciphertext, the ciphertext is subsequently transmitted to the processor for storing, and the ciphertext is transmitted to a decryption module of other users by the processor together with the plaintext hash redundant data; and

a decryption module, configured to process the ciphertext and plaintext hash redundant data from other users and generate a plaintext, including a processor, a first affine transformation inversion component, an isomorphism inversion component, a trapdoor component, an isomorphism component and a second affine transformation inversion component, where the trapdoor component includes a modular exponentiation component and a polynomial inversion component, the processor transmits the ciphertext to the first affine transformation inversion component for operation on affine transformation inversion, the result of the first affine transformation inversion component is transmitted to the isomorphism inversion component for operation on isomorphism inversion, the result of the isomorphism inversion component is transmitted to the modular exponentiation component and polynomial inversion component of the trapdoor component for operations on modular exponentiation and polynomial inversion respectively, one group or multiple groups of solutions calculated by the polynomial inversion operation are transmitted to the isomorphism component for operation on isomorphism, the result of the isomorphism component is transmitted to the second affine transformation inversion component for operation on affine transformation inversion, the final result is transmitted to the processor, and for transferred one group or multiple groups of data, the processor calculates the hash value of each group of data respectively that if a obtained hash value of one group of data are equal to the plaintext hash redundant data stored in the processor in advance, the group of data are stored and output as a plaintext, otherwise the processor outputs a warning message of decryption failure.

The system for multivariate public key encryption/decryption needs to be initialized before first use, as follows.

1. Arithmetic operations of all components of the system except the trapdoor component are based on a finite field F of characteristic two and cardinality $q$, where $q = 2^k$ and $k \in \mathbb{N}$ ;

2. Select an irreducible polynomial $f(y) \in F[y]$ with a degree $n$ ($\in \mathbb{N}$ ), define a $n$ dimensional extension field of the finite field $F$ that $E = F[y] / (f(y))$, and obviously, the extension field $E$ is isomorphic to $F_{q^n}$ and has $q^n$ elements, and all operations of the trapdoor component are based on the extension field $E$ ;

3. Let the number of equations of the multivariate public key cryptosystem be $n$ and the number of variate also be $n$ ;

4. In the isomorphism component, let $\varphi: E \to F^n$ be a standard F-linear isomorphism from $E$ to $F^n$, which has the following property:

$$\varphi(a_0 + a_1 x + \ldots + a_{n-1} x^{n-1}) = (a_0, a_1 \ldots, a_{n-1}), \ a_{i(0 \leq i \leq n)} \in F,$$

similarly, in the isomorphism inversion component, let $\varphi^{-1}$ be an isomorphic map from $F^n$ to $E$, which has the following property:

$$\varphi^{-1}(a_0, a_1, \ldots, a_{n-1}) = (a_0 + a_1 x + \ldots + a_{n-1} x^{n-1}), a_{i(0 \leq i \leq n)} \in F;$$

5. In the first affine transformation inversion component, let $T(\bar{y}_1,...,\bar{y}_n) = (y_1,...,y_n)$ be a randomly selected invertible affine transformation from $F^n$ to $F^n$, similarly, in the second affine transformation inversion component, let $S(x_1,...,x_n)$ = $(x_1,...,x_n)$ be a randomly selected invertible affine transformation from $F^n$ to $F^n$ ;

6. In the trapdoor component, define a trapdoor one-way function $G(X)$ in the extension field $E$ :

$$G(X) = g(X)^t,$$

where $g(X) = \sum_{i=1}^{d}(X - h_i)$, $X, h_i \in E$, $d = \deg(g(X))$, $D = \deg(G(X))$, $t \in Z_{qn}$ and $\gcd(t, q^n - 1) = 1$, in addition, $v$ is defined as an inverse of $t$ that $t \cdot v \equiv 1 \mod(q^n - 1)$;

7. In the public key transformation component, $\bar{P}$ is a center map from $F^n$ to $F^n$ :

$$\bar{P}(x_1,...,x_n) = (\bar{p}_1(x_1,...,x_n),...,\bar{p}_n(x_1,...,x_n)),$$

where $\bar{p}_i(i \in \mathbb{N}$ , $1 \le i \le n)$ is a polynomial with $n$ variables in the base field F ;

8. In the public key transformation component, $P$ is a public key map from $F^n$ to $F^n$ :

$$P(x_1,...,x_n) = (p_1(x_1,...,x_n),...,p_n(x_1,...,x_n))$$

where $p_i(i \in \mathbb{N}$ , $1 \le i \le n)$ is a polynomial with $n$ variables in the base field $F$ ;

9. Initialize the center map p and the public key map $P$, and let them be:

$$\bar{P} = \varphi \circ G \circ \varphi^{-1}(x_1,...,x_n)$$

and

$$P = T \circ \bar{P} \circ S = T \circ \varphi \circ G \circ \varphi^{-1} \circ S(x_1,...,x_n);$$

and

10. The data of the above map are stored in the memory after the system is initialized, and in work process of the system, the data are controlled by the scheduler and scheduled to the corresponding component for operation accordingly.

When the initialization completes, the system can be used formally.

A method for multivariate public key encryption/decryption includes the following steps:

Step 1, encryption:

a. when the selector is in an ON-state, the encryption module of the system works, the selector is connected with the scheduler of the processor, where the processor includes a scheduler, a hash detector and a memory. When the plaintext to be encrypted $(x_1',...,x_n') \in F^n$ is transmitted to the processor, the hash detector calculates the hash value of the plaintext by $(h_1',...,h_j') = Hash(x_1',...,x_n')$ to obtain plaintext hash redundant data $(h_1',...,h_j')$,

and stores the plaintext and plaintext hash redundant data, where $Hash(\cdot)$ is secure one-way function in cryptography;

b. plaintext $(x_1',...,x_n')$ is transmitted to the public key transformation component, and is plugged into public key map $P(x_1,...,x_n)$ by the public key transformation component to respectively solve the multivariate polynomials $p_1(x_1',...,x_n'),...,p_n(x_1',...,x_n')$, the results are respectively denoted by $y_1',...,y_n'$, and $(y_1',...,y_n')$ is a ciphertext; and

c. the ciphertext $(y_1',...,y_n')$ is subsequently transmitted to the processor for storing, and the ciphertext $(y_1',...,y_n')$ is transmitted together with the plaintext hash redundant data $(h_1',...,h_j')$ to a decryption module of other users by the processor.

Step 2, decryption:

a. when the selector is in an OFF-state, the decryption module of the system works, after receiving the ciphertext $(y_1',...,y_n')$ and plaintext hash redundant data $(h_1',...,h_j')$ from other users the processor stores the plaintext hash redundant data $(h_1',...,h_j')$ and transmits the ciphertext $(y_1',...,y_n')$ to the first affine transformation inversion component for operation on affine transformation inversion by $(\bar{y}_1,...,\bar{y}_n) = T^{-1}(y_1',...,y_n')$ ;

b. the result $(\bar{y}_1,...,\bar{y}_n)$ of the first affine transformation inversion component is transmitted to the isomorphism inversion component for operation on isomorphism inversion by $\bar{Y} = \varphi^{-1}(\bar{y}_1,...,\bar{y}_n)$;

c. the result $\bar{Y}$ of the isomorphism inversion component is transmitted to the trapdoor component for operations on modular exponentiation and polynomial inversion respectively, namely, the modular exponentiation component calculates the inverse V of $t$ by $t \cdot v = 1 \mod(q^n - 1)$ and calculates $\hat{Y} = \bar{Y}^v$, then the polynomial inversion component solves $g(\hat{X}) = \hat{Y}$ on unknown variable $\hat{X}$ by the probabilistic Berlekamp algorithm, and one or more groups of solutions can be obtained, $d$ groups at most, so the solution set can be denoted by $\hat{X}_i(1 \le i \le d)$ ;

d. $\hat{X}_i(1 \le i \le d)$ are transmitted to the isomorphism component for operation on isomorphism by $(\bar{x}_{i1},...,\bar{x}_{in}) = \varphi(\hat{X}_i)$;

e. the result of the isomorphism component is transmitted to the second affine transformation inversion component for operation on affine transformation inversion by $(x_{i1}',...,x_{in}') = S^{-1}(\bar{x}_{i1},...\bar{x}_{in})$; and

f. the final result $(x_{i1}',...,x_{in}')$ is transmitted to the processor, the processor calculates the hash value of $(x_{i1}',...,x_{in}')$ that if a obtained hash value of $(x_{i1}',...,',...,x_{in}')$ for some $i$ is equal to the plaintext hash redundant data $(h_1',...,h_j')$, the group of data $(x_{i1}',...,x_{in}')$ is output as an expected plaintext, and if $(x_{i1}',...,x_{in}') \ne (h_1',...,h_j')$ for all $i$, the processor outputs a warning message of decryption failure.

The initialization of the system is detailed by a specific embodiment.

1. Arithmetic operations of all components except the trapdoor component are based on a finite field $F$ of cardinality $q = 2$, where the base field F includes two elements that $\{0,1\}$ ;

2. Select an irreducible polynomial $f(y) = y^5 + y^2 + 1$ , and define a field $E = F[y] / (f(y))$ which is an extension of $F$. It has $2^5 = 32$ elements;

3. The number of equation and that of variable in the system are both $n = 5$ ;

4. It has $\varphi(a_0 + a_1x + a_2x^2 + a_3x^3 + a_4x^4) = (a_0, a_1, a_2, a_3, a_4)$ in the isomorphism component, and it has $\varphi^{-1}(a0, a_1, a_2, a_3, a_4) = (a_0 + a_1x + a_2x^2 + a_3x^3 + a_4x^4$ in the isomorphism inversion component.

5. Initialize $T = \begin{pmatrix} 0 & 1 & 1 & 0 & 1 \\ 0 & 0 & 1 & 1 & 0 \\ 1 & 1 & 0 & 1 & 0 \\ 0 & 1 & 0 & 0 & 0 \\ 0 & 0 & 0 & 1 & 0 \end{pmatrix} \begin{pmatrix} x_1 \\ x_2 \\ x_3 \\ x_4 \\ x_5 \end{pmatrix} + \begin{pmatrix} 1 \\ 0 \\ 1 \\ 0 \\ 1 \end{pmatrix}$ in the first affine transformation inversion component, and

initialize $S = \begin{pmatrix} 0 & 0 & 0 & 1 & 0 \\ 1 & 0 & 1 & 0 & 1 \\ 0 & 1 & 0 & 0 & 0 \\ 0 & 1 & 0 & 0 & 1 \\ 1 & 0 & 0 & 0 & 0 \end{pmatrix} \begin{pmatrix} x_1 \\ x_2 \\ x_3 \\ x_4 \\ x_5 \end{pmatrix} + \begin{pmatrix} 1 \\ 0 \\ 0 \\ 1 \\ 0 \end{pmatrix}$ in the second affine transformation inversion component;

6. $g$ is initialized as $g(X) = [X-(y^4 + y^3 + y^2)][X - (y^3 + y^2 + y + 1)][X - (y^4 + y^3 +1)]$ in the trapdoor component, thus $d = 3$. In addition, initialize $t = 16$ that

$$G(X) = g(X)^{16} = X^{48} + y^3 X^{32} + (y^4 + y^3 + y + 1)X^{16} + y^4 + y^3 + y^2 + y + 1;$$

7. In the public key transformation component, it is easy to get the public key transformation P by $P = T \circ P \circ S = T \circ \varphi \circ G \circ \varphi^{-1} \circ S(x_1,...,x_n)$, which includes the following five polynomials:

$$p_1(x_1,x_2,x_3,x_4,x_5) = x_1 x_2 + x_1 x_3 + x_1 x_4 + x_1 + x_2 x_3 + x_3 x_4 + x_3 x_5 + x_4 x_5 + 1,$$

$$p_2(x_1,x_2,x_3,x_4,x_5) = x_1 x_2 + x_1 x_3 + x_2 x_5 + x_3 x_4 + x_3 x_5 + x_4 + 1,$$

$$p_3(x_1,x_2,x_3,x_4,x_5) = x_1 x_5 + x_2 x_3 + x_2 + x_3 x_5 + x_4 x_5 + x_5 + 1,$$

$$p_4(x_1,x_2,x_3,x_4,x_5) = x_1 x_2 + x_2 x_3 + x_4 x_5,$$

and

$$p_5(x_1,x_2,x_3,x_4,x_5) = x_1 x_2 + x_1 x_4 + x_1 x_5 + x_1 + x_2 x_4 + x_3 x_4 + x_3 + x_4 + 1.$$

After the initialization, the encryption and corresponding decryption for a plaintext (1,0,1,1,0) will be detailed as follows. For simplicity, the hash value of (1,0,1,1,0) is set as (1,1,1), and $j = 3$.
Encryption:

1. the selector is in an ON-state;
2. for the plaintext to be encrypted $M = (1,0,1,1,0)$, the processor calls the hash detector to calculates its hash value $(1,1,1) = Hash(M)$ that plaintext hash redundant data (1,1,1) is obtained, the plaintext data (1,0,1,1,0) and plaintext hash redundant data (1,1,1) are stored in the memory, and the plaintext (1,0,1,1,0) is transmitted to the public key transformation component by the processor;
3. after receiving the data the public key transformation component interacts with the processor, calls a function $P$, and respectively solves $p_1(1,0,1,1,0),...,p_5(1,0,1,1,0)$ to get a result (1,0,1,0,0) that will be returned to the memory; and
4. the processor takes data (1,0,1,0,0) as the ciphertext of the plaintext (1,0,1,1,0), and outputs the ciphertext (1,0,1,1,0) to the user or device processor together with its plaintext hash redundant data (1,1,1).

Decryption:

1. the selector is in an OFF-state;

2. the data to be decrypted (1,0,1,0,0) and its plaintext hash redundant data (1,1,1) are transmitted to the processor by a input port and stored in the memory, and the ciphertext data (1,0,1,0,0) is transmitted to the first affine transformation inversion component;

3. after receiving the data (1,0,1,0,0) the first affine transformation inversion component interacts with the processor firstly, calls a program, calculates $T^{-1}(1,0,1,0,0) = (1,0,1,1,1)$, and the result (1,0,1,1,1) is transmitted to the isomorphism inversion component;

4. after receiving the data (1,0,1,1,1) the isomorphism inversion component interacts with the processor firstly, acts on the data and maps it to the element $y^4 + y^3 + y^2 +1$ in the extension field $E$, and the result is transmitted to the trapdoor component;

5. after receiving the data $y^4 + y^3 + y^2 +1$ the trapdoor component interacts with the processor firstly, calls the modular exponentiation component, calculates the inverse of $t$ that $v = 2$ , calculates $(y^4 + y^3 + y^2 + 1)^v$ to get a result $(y^4 + y^3 + y^2 +1)^2 = y^4 + y^2 + y$, then the trapdoor component calls the polynomial inversion component to solve the equation $g(X) = y^4 + y^2 + y$ on unknown variable $X$ that the solution of $[X-(y^4 + y^3 + y^2)][X-(y^3 + y^2 + y +1)]$ $[X -(y^4 + y^3 +1)] = y^4 + y^2 + y,$ where the solution set of the equation is $\{y^3, y^4 + y^3, y^4 + y^3 + y\}$, finally the trapdoor component transmits the solution set $\{y^3, y^4 + y^3, y^4 + y^3 + y\}$ to the isomorphism component;

6. after receiving the data set $\{y^3, y^4 + y^3, y^4 + y^3 + y\}$ the isomorphism component interacts with the processor firstly, the data set is mapped to five dimensional vector in the base field $F$ respectively to get {(0,0,0,1,0), (0,0,0,1,1), (0,1,0,1,1)}, and the isomorphism component transmits the data set {(0,0,0,1,0), (0,0,0,1,1), (0,1,0,1,1)} to the second affine transformation inversion component;

7. after receiving the data set {(0,0,0,1,0), (0,0,0,1,1), (0,1,0,1,1)} the second affine transformation inversion component interacts with the processor firstly, runs a program and calculates $S^{-1}(0,0,0,1,0)$, $S^{-1}(0,0,0,1,1)$ and $S^{-1}(0,1,0,1,1)$ respectively to get {(0,0,0,1,0), (1, 0, 1, 1, 0), (1,0,0,1,0)}, and the data set is returned to the memory;

8. the processor calls the hash detector, calculates the hash value of data (0,0,0,1,0), (1,0,1,1,0) and (1,0,0,1,0) respectively, where only the hash value of data (1,0,1,1,0) is (1,1,1) that $Hash(1,0,1,1,0) = (1,1,1)$ that is equal to the plaintext hash redundant data (1,1,1) stored in the memory; and

9. data (1, 0, 1, 1, 0) is output to the user or device as a decrypted plaintext by the processor.

The above embodiment is a simpler embodiment of the present disclosure, but the implements of the present disclosure is not limited by the above embodiment. The recommended system parameters of the present disclosure are $q = 2$, $n = 160$, $d = 6$ and $t =128$, where the security level is up to $2^{105}$. Alternative embodiments will become apparent to those skilled in the art to which the present disclosure pertains without departing from its spirit and scope.

**Claims**

1. A system for multivariate public key encryption/decryption, comprising:

an encryption module, configured to encrypt a plaintext and generate a ciphertext, comprising a processor and a public key transformation component, wherein when the plaintext to be encrypted is transmitted to the processor, the processor calculates the hash value of the plaintext to obtain corresponding plaintext hash redundant data, stores the plaintext and plaintext hash redundant data, and then transmits the plaintext data to the public key transformation component, the plaintext data are then substituted into multivariate polynomials respectively to obtain a ciphertext, the ciphertext is subsequently transmitted to the processor for storing, and the processor transmits both the ciphertext and the plaintext hash redundant data to a decryption module of other users, where the plaintext hash redundant data plays a role of detecting plaintext; and
a decryption module, configured to process the ciphertext and plaintext hash redundant data from other users and generate a plaintext, comprising a processor, a first affine transformation inversion component, an isomorphism inversion component, a trapdoor component, an isomorphism component and a second affine transformation inversion component, where the trapdoor component includes a modular exponentiation component and a polynomial inversion component, after receiving the ciphertext and plaintext hash redundant data from other users, the processor stores the plaintext hash redundant data and transmits the ciphertext to the first affine transformation inversion component for operation on affine transformation inversion, the result of the first affine transformation inversion component is transmitted to the isomorphism inversion component for operation on isomorphism inversion, the result of the isomorphism inversion component is transmitted to the modular exponentiation component and polynomial inversion component of the trapdoor component for operations on modular exponentiation and polynomial inversion respectively, one group or multiple groups of solutions calculated by the polynomial inversion operation are transmitted to the isomorphism component for operation on isomorphism, the result of the isomorphism component is transmitted to the second affine transformation inversion component for operation on affine transformation inversion, the final result is transmitted to the processor, and for transferred one group or multiple groups of data, the processor calculates the hash value of each group of data respectively that if a obtained hash value of one group of data are equal to the plaintext hash redundant data stored in the processor in advance, the group of data are stored and output as a expected plaintext, otherwise, the processor outputs a warning message of decryption failure.

2. The system for multivariate public key encryption/decryption of claim 1, **characterized in that** the system further comprises a selector connected with the processor, when the selector is in an ON-state, the encryption module of the system works, and when the selector is in an OFF-state, the decryption module of the system works.

3. The system for multivariate public key encryption/decryption of claim 2, **characterized in that** the processor comprises a scheduler connected with the selector, the ON-state and OFF-state of the selector are recognized and managed by the scheduler in the processor, and the data stored in the processor is controlled by the scheduler to be scheduled to the corresponding component for operation accordingly.

4. The system for multivariate public key encryption/decryption of claim 1, **characterized in that** the processor also comprises a hash detector, configured to calculate the hash value of data in the processor, and a memory, configured to store data in the processor.

5. A method for multivariate public key encryption/decryption, comprising:

   Step 1, encryption:

   a. when the plaintext to be encrypted is transmitted to the processor, the processor calculates the hash value of the plaintext to obtain corresponding plaintext hash redundant data, and stores the plaintext and plaintext hash redundant data;
   b. the plaintext are transmitted to the public key transformation component, a expected ciphertext can be obtained by plugging the plaintext data into multivariate polynomials respectively;
   c. the ciphertext is subsequently transmitted to the processor for storing, and the ciphertext is transmitted to a decryption module of other users by the processor together with the plaintext hash redundant data;

   Step 2, decryption:

   a. after receiving the ciphertext and plaintext hash redundant data from other users, the processor stores the plaintext hash redundant data and transmits the ciphertext to the first affine transformation inversion component for operation on affine transformation inversion;
   b. the result of the first affine transformation inversion component is transmitted to the isomorphism inversion component for operation on isomorphism inverse;
   c. the result of the isomorphism inversion component is transmitted to the modular exponentiation component and polynomial inversion component of the trapdoor component for operations on modular exponentiation and polynomial inversion respectively, and one group or multiple groups of solutions can be calculated by the polynomial inversion operation.
   d. the one group or multiple groups of solutions calculated by the polynomial inversion operation are transmitted to the isomorphism component for operation on isomorphism;
   e. the result of the isomorphism component is transmitted to the second affine transformation inversion component for operation on affine transformation inversion; and
   f. the final result is transmitted to the processor, and for transferred one group or multiple groups of data, the processor calculates the hash value of each group of data respectively that if a obtained hash value of one group of data are equal to the plaintext hash redundant data stored in the processor, the group of data are stored and output as a expected plaintext, otherwise the processor outputs a warning message of decryption failure.

**6.** The method of claim 5, **characterized in that**
the encryption of Step 1 comprises:

a. when the plaintext to be encrypted $(x_1',...,x_n') \in F^n$ is transmitted to the processor, the processor calculates the hash value of the plaintext $(h_1',...,h_j') = Hash(x_1',...,x_n')$ to obtain plaintext hash redundant data $(h_1',...,h_j')$, and stores the plaintext and plaintext hash redundant data, where $Hash(\cdot)$ is secure one-way function in cryptography;
b. plaintext data $(x_1',...,x_n')$ is transmitted to the public key transformation component, and is plugged into public key mapping $P(x_1,...,x_n)$ by the public key transformation component to respectively solve the multivariate polynomials $p_1(x_1',...,x_n'),...,p_n(x_1',...,x_n')$, the results are respectively denoted by $y_1',...,y_n'$, and $(y_1',...,y_n')$ is a ciphertext;
c. the ciphertext $(y_1',..., y_n')$ is subsequently transmitted to the processor for storing, and the ciphertext $(y_1',...,y_n')$ is transmitted together with the plaintext hash redundant data $(h_1',...,h_j')$ to a decryption module of other users by the processor;

the decryption of Step 2 comprises:

a. after receiving the ciphertext $(y_1',...,y_n')$ and plaintext hash redundant data $(h_1',...,h_j')$ from other users, the processor stores the plaintext hash redundant data $(h_1',...,h_j')$ and transmits the ciphertext $(y_1',...,y_n')$ to the first affine transformation inversion component for operation on affine transformation inversion by $(\overline{y}_1,...,\overline{y}_n) = T^{-1}(y_1',...,y_n')$;
b. the result of the first affine transformation inversion component $(\overline{y}_1,...,\overline{y}_n)$ is transmitted to the isomorphism inversion component for operation on isomorphism inversion by $\overline{Y} = \varphi^{-1}(\overline{y}_1,...,\overline{y}_n)$;
c. the result of the isomorphism inversion component $\overline{Y}$ is transmitted to the trapdoor component for operations on modular exponentiation and polynomial inversion respectively, namely, the modular exponentiation component calculates the inverse V of $t$ by $t \cdot v \equiv 1 \mod(q^n -1)$ and calculates $\hat{Y} = \overline{Y}^v$, then the polynomial inversion component solves $g(\hat{X}) = \hat{Y}$ on unknown variable $\hat{X}$ by the probabilistic Berlekamp algorithm, and one or more groups of solutions can be obtained, $d$ groups at most, so the solution set can be denoted by $\hat{X}_i (1 \leq i \leq d)$;
d. $\hat{X}_i (1 \leq i \leq d)$ are transmitted to the isomorphism component for operation on isomorphism $(\overline{x}_{i1},...,\overline{x}_{in}) = \varphi(\hat{X}_i)$;
e. the result of the isomorphism component is transmitted to the second affine transformation inversion component for operation on affine transformation inversion by $(x_{i1}',...,x_{in}') = S^{-1}(\overline{x}_{i1},...,\overline{x}_{in})$; and
f. the final result $(x_{i1}',...,x_{in}')$ is transmitted to the processor, the processor calculates the hash value of $(x_{i1}',...,x_{in}')$ that if a obtained hash value of data $(x_{i1}',...,x_{in}')$ for some $i$ is equal to the plaintext hash redundant data $(h_1'...,h_j')$, the group of data $(x_{i1}',...,x_{in}')$ is output as a expected plaintext, and if $(x_{i1}',...,x_{in}') \neq (h_1',...,h_j')$ for all $i$, the processor outputs a warning message of decryption failure.

**7.** The method of claim 5, **characterized in that** the method further comprises:

before the encryption of Step 1, when the selector is in an ON-state, the encryption module of the system works, wherein the selector is connected with the processor; and
before the decryption of Step 2, when the selector is in an OFF-state, the decryption module of the system works, wherein the selector is connected with the processor.

**8.** The method of claim 7, **characterized in that** the processor comprises a scheduler connected with the selector, the ON-state and OFF-state of the selector are recognized and managed by the scheduler in the processor, and the data stored in the processor is controlled by the scheduler to be scheduled to the corresponding component for operation accordingly.

**9.** The method of claim 5, **characterized in that** the processor further comprises a hash detector, configured to calculate the hash value of data in the processor, and a memory, configured to store data in the processor.

First Affine Transformation Inversion Component

Isomorphism Inversion Component

Modular Exponentiation Component

Polynomial inversion Component

Isomorphism Component

Second Affine Transformation Inversion Component

Trapdoor Component

Selector

Scheduler

Memory

Hash Detector

Public Key Transformation Component

Processor

Fig. 1